# EUROPEAN PATENT APPLICATION

(11) **EP 3 739 324 A1**
(43) Date of publication of application: **18.11.2020**
(21) Application number: 20169295.1
(22) Date of filing: 14.04.2020
(51) Int. Cl.: G01N 23/04, G01N 23/046, G06T 11/00

(54) **RECONSTRUCTION DEVICE**

(30) Priority: 16.05.2019 JP 2019092535
(71) Applicant: Shimadzu Corporation, Kyoto 604-8511 (JP)
(72) Inventor: KEYAKI, Yasuyuki, Kyoto-shi, Kyoto 604-8511 (JP); TAKAHASHI, Ryo, Kyoto-shi, Kyoto 604-8511 (JP)
(74) Representative: Mewburn Ellis LLP

(57) **Abstract**

Provided is a reconstruction device capable of more flexibly setting an area for performing an image reconstruction operation again.

The reconstruction device is one that reconstructs a tomographic image of a subject on the basis of projection data acquired by applying X-rays to the subject from multiple angles, and includes: a reconstruction part that performs an image reconstruction operation on the projection data; a display control part that is provided with a display area for the tomographic image and a fluoroscopic image of the subject, and on a display device, displays a setting GUI screen for setting a reconstruction area; an input part that receives a user operation on the setting GUI screen; and an area setting part that, on the basis of a user input, sets the reconstruction area in the projection data, In addition, with the optical axis of the X-rays as a first axis, an axis orthogonal in the same plane to the first axis as a second axis, and the rotation axis of a rotation stage as a third axis, which is perpendicular to the plane including the first axis and the second axis as a third axis, as the tomographic image, the display control part displays a central tomographic image at the center, an upper end tomographic image at the uppermost end, and a lower end tomographic image at the lowermost end on the third axis in the reconstruction area set by the area setting part, and as the reconstruction area set by the area setting part, displays the center, the uppermost end, and the lowermost end on the third axis on the fluoroscopic image, and as the reconstruction area, the area setting part sets the center, the uppermost end, and the lowermost end on the third axis by the user input.

## Description

### Technical Field

The present invention relates to a reconstruction device.

### Background Art

As an apparatus for non destructively observing the internal structure of an industrial product or the like, there has conventionally been known an industrial X-ray CT (Computed Tomography) apparatus for obtaining a tomographic image of a subject. The X-ray CT apparatus is such that a rotation stage on which a subject is placed is arranged between an oppositely arranged X-ray source and X-ray detector, and pieces of X-ray projection data on the subject are collected from various directions. The X-ray CT apparatus is connected with a computer installed with software for performing operational control of the X-ray CT apparatus and a reconstruction operation on the pieces of collected projection data. Such an X-ray CT apparatus is configured to be able to store pieces of projection data acquired by CT imaging in a storage device, and make various image reconstructions using the pieces of the projection data. For example, image reconstruction called zooming reconstruction is performed when it is desired to obtain an image larger than an image constructed by default image reconstruction. The software for performing the image reconstruction operation is provided with a graphical user interface (GUI), and on a display part connected to the computer, a GUI screen on which an image display area, operation buttons, and the like are arranged is displayed to assist a user to perform control software operations. The user uses a pointing device such as a mouse and/or a character input device such as a keyboard to set an area for desiring to perform the image reconstruction operation again (see Patent Literature 1).

### Citation List

### Patent Literatures

Patent Literature 1: Japanese Unexamined Patent Application Publication No. 2003-185601

### Summary of Invention

### Technical Problem

Such control software for the X-ray CT apparatus has the problems that the degree of freedom of setting the area for performing the image reconstruction operation again is low and unnecessary areas are calculated, resulting in a long calculation time.

The present invention has been made in order to solve the above problems, and provides a reconstruction device capable of more flexibly setting an area for performing an image reconstruction operation again.

### Solution to Problem

A first aspect of the present invention is a reconstruction device that reconstructs a tomographic image of a subject on the basis of projection data acquired by applying X-rays to the subject from multiple angles, and the reconstruction includes: a reconstruction part that performs an image reconstruction operation on the projection data; a display control part that is provided with a display area for the tomographic image and a fluoroscopic image of the subject, and on a display device, displays a setting GUI screen for setting a reconstruction area; an input part that receives a user operation on the setting GUI screen; and an area setting part that, on the basis of a user input, sets the reconstruction area in the projection data. In addition, with the optical axis of the X-rays as a first axis, an axis orthogonal in the same plane to the first axis as a second axis, and the rotation axis of a rotation stage as a third axis, which is perpendicular to the plane including the first axis and the second axis, as the tomographic image, the display control part displays a central tomographic image at the center, an upper end tomographic image at the uppermost end, and a lower end tomographic image at the lowermost end on the third axis in the reconstruction area set by the area setting part, and as the reconstruction area set by the area setting part, displays the center, the uppermost end, and the lowermost end on the fluoroscopic image, and as the reconstruction area, the area setting part sets the center, the uppermost end, and the lowermost end on the third axis by the user input.

### Advantageous Effects of Invention

According to the first aspect of the present invention, the area for performing the reconstruction operation again is set by a range in the plane including the first axis and the second axis and a range defined by the position of the reconstruction center on the third axis, and therefore the area for performing the reconstruction operation again can be more flexibly set.

### Brief Description of Drawings

FIG. 1 is a schematic diagram of an X-ray CT apparatus according an embodiment of the present invention;
FIG. 2 is a block diagram explaining a main control system of the X-ray CT apparatus according to the embodiment of the present invention;
FIG. 3 is a display example of a condition setting screen for performing a reconstruction operation again;
FIG. 4 is a display example of a numerical value input area;
FIG. 5 is a diagram explaining a case where a reconstruction area in an X-Y plane is set on an image; and
FIG. 6 is a diagram explaining a case where a reconstruction area in a Z-axis direction is set on an image.

### Description of Embodiments

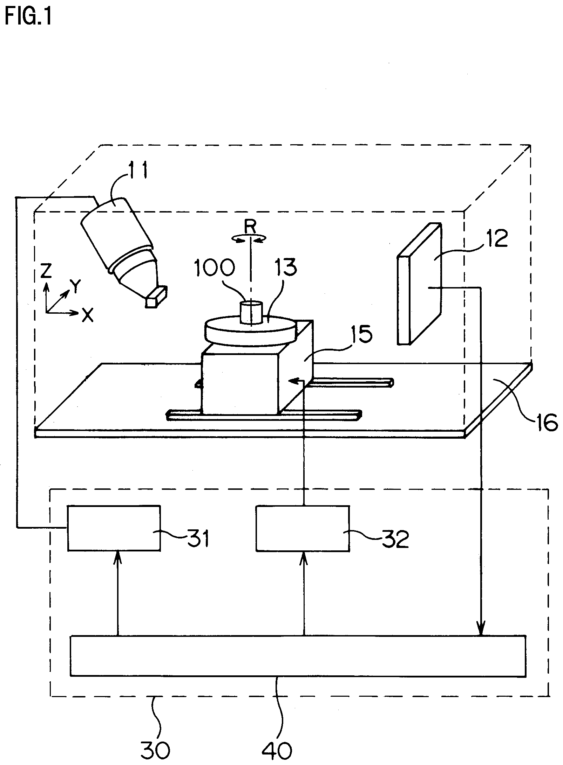

In the following, an embodiment of the present invention will be described on the basis of the drawings. FIG. 1 is a schematic diagram of an X-ray CT apparatus according the embodiment of the present invention.

The X-ray CT apparatus is one that performs CT imaging using X-rays. The X-ray CT apparatus includes: an X-ray source 11 that generates X-rays; an X-ray detector 12 that is arranged opposite to the X-ray source 11; a rotation stage 13 for placing a subject 100; and a control device 30 that controls the whole of the X-ray CT apparatus. The control device 30 is configured to include a personal computer 40, an X-ray controller 31, and a stage controller 32.

Between the X-ray source 11 and the X-ray detector 12, the rotation stage 13 that rotates around a rotation axis R is arranged. The rotation stage 13 is moved on a surface plate 16 in a direction along an X-ray optical axis by a stage movement mechanism 15. By changing the distance between the rotation stage 13 and the X-ray source 11 using the stage movement mechanism 15, the enlargement ratio of a projection image of the subject 100 detected by the X-ray detector 12 is changed. In addition, in this specification, as illustrated in FIG. 1, a first axis is set to an X-axis along the X-ray optical axis, a second axis to a Y-axis orthogonal to the X-axis in the same plane, and a third axis to a Z-axis along the rotation axis R of the rotation stage 13, which is perpendicular to the X-Y plane.

The X-ray source 11 has an X-ray tube that applies X-rays. The X-ray source 11 applies a conical beam (cone beam) from an X-ray focal point toward the subject 100. Depending on the material and X-ray transmission characteristics of the subject 100, tube voltage and tube current to be supplied to the X-ray tube are controlled by the X-ray controller 31. The X-ray controller 31 is under control of the personal computer 40. X-rays detected by the X-ray detector 12 after being transmitted through the subject 100 are taken into the personal computer 40 as projection data. As the X-ray detector 12, a flat panel detector (FPD) or a two-dimensional detector made by combining an image intensifier and a CCD camera can be employed. In the personal computer 40, a tomographic image of the subject 100 sliced in a plane along the X-Y plane orthogonal to the rotation axis R is constructed by executing an image reconstruction program on the basis of the projection data.

The rotation stage 13 and the stage movement mechanism 15 respectively have independent driving motors, and the motors are controlled by driving signals supplied from the stage controller 32. The stage controller 32 is under control of the personal computer 40.

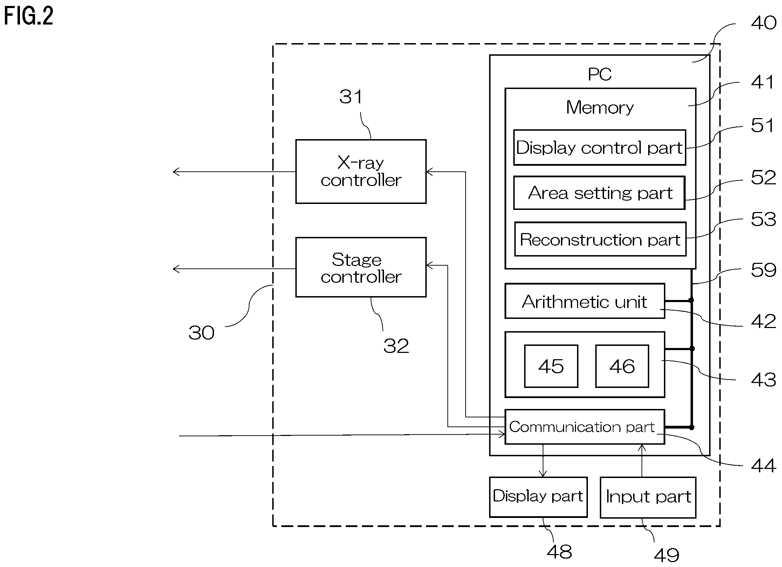

FIG. 2 is a block diagram explaining a main control system of the X-ray CT apparatus according to the embodiment of the present invention.

The personal computer 40 includes: a memory 41 including a RAM, a ROM, and the like; an arithmetic unit 42 such as a CPU that performs various types of arithmetic processing; a storage device 43 that stores projection data acquired by CT imaging, and the like; and a communication part 44 for transmitting control signals to the X-ray controller 31 and the stage controller 32. The memory 41, the arithmetic unit 42, the storage device 43, and communication part 44 are connected via an internal bus 59 that enables mutual data communication. The personal computer 40 is connected via the communication part 44 with a display part 48 and an input part 49 that is for providing various instructions to the apparatus and includes a mouse, a keyboard, and the like. The personal computer 40 connected with the display part 48 and the input part 49 functions as the reconstruction device of the present invention.

The memory 41 stores the program that operates the arithmetic unit 42 to fulfill functions. In FIG. 2, the program installed in the personal computer 40 is illustrated as functional blocks. In this embodiment, as the functional blocks, a display control part 51 that fulfills a function of controlling screen display and screen transition on the display part 48, an area setting part 52 for fulfilling a function of setting an area for performing image reconstruction on projection data, and a reconstruction part 53 that fulfills a function of the image reconstruction are provided.

In this specification, projection data acquired by CT imaging is defined as raw data and data in a state after image reconstruction using raw data is defined as image data to discriminate them. The storage device 43 includes: a raw data storage part 45 that is an area for storing raw data; and an image data storage part 46 that is an area for storing image data. In addition, the storage device 43 may be a magnetic storage medium such as a hard disk drive (HDD) or a semiconductor memory such as a solid state drive (SSD). Further, the storage device 43 is not limited to one connected via the internal bus 59 as in this embodiment. That is, the storage device 43 may be one directly connected to the personal computer 40 as an external storage device or indirectly connected via a network line. Still further, the raw data storage part 45 and the image data storage part 46 may be respectively physically separated storage devices.

When performing CT imaging using the X-ray CT apparatus having the above-described configuration, projection data is stored in the raw data storage part 45, and also the image reconstruction is performed to display a tomographic image of the subject 100 on the display part 48, as well as to store a tomographic image along a predetermined slice surface in the image data storage part 46.

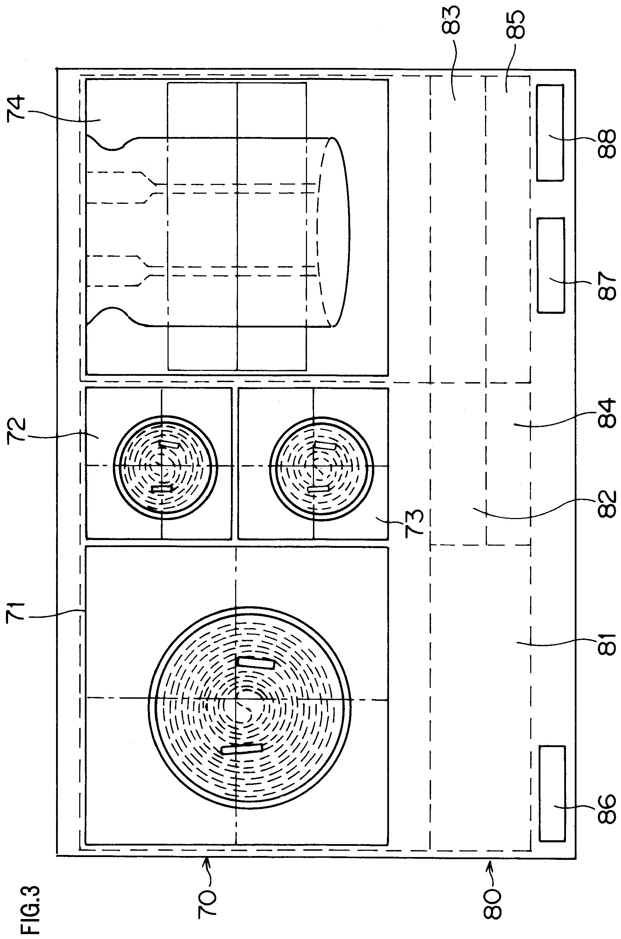

FIG. 3 is a display example illustrating a condition setting screen for performing a reconstruction operation again.

The condition setting screen in this embodiment is designed as a setting GUI screen. Within the screen, an image display area 70 and a numerical value input area 80 are arranged, and function buttons such as a reading button 86 for reading raw data and image data, a reconstructing button 87 for reconstruction within a set range, and a closing button 88 for closing the condition setting screen are arranged. In addition, when a user selects the reading button 86 to transition a screen to a data selection screen, an image to be displayed in the screen display area 70 can be selected from among raw data obtained by past CT imaging and image data, which are stored in the storage device 43.

In the image display area 70, a central tomographic image display area 71, an upper end tomographic image display area 72, a lower end tomographic image display area 73, and a fluoroscopic image display area 74 are arranged. In image display provided by a conventional apparatus, a central tomographic image and a fluoroscopic image have only been displayed, whereas in this embodiment, the upper end tomographic image display area 72 and the lower end tomographic image display area 73 are provided. In addition, tomographic images to be displayed are cross-sectional images constructed in an image reconstruction area preliminarily determined in a display field of view (FOV) that is a range for display on a screen. A central tomographic image to be displayed in the central tomographic image display area 71 is a cross-sectional image at an image reconstruction center (Z). Also, a tomographic image to be displayed in the upper end tomographic image display area 72 is a cross-sectional image at the uppermost part of a FOV(Z) of the image reconstruction area, and a tomographic image to be displayed in the lower end tomographic image display area 73 is a cross-sectional image at the lowermost part of the FOV(Z) of the image reconstruction area. The images at the uppermost part and lower most part along the Z-axis of the FOV are presented, and thereby a user can confirm at a glance the uppermost end and lowermost end at which the tomographic images can be obtained. In addition, the FOV set on the condition setting screen is the display FOV, and can be changed within the range of a scan FOV that is a projection data acquisition field of view.

In the numerical value input area 80, in addition to a reconstruction range input area 81 for numerically setting a reconstruction range, an area 82 for inputting set values related to image shaping such as an image size, an area 83 for inputting set values related to how an image is viewed, such as slice width and smoothing, an area 84 for displaying the free space of the storage device 43, and an area 85 for arbitrarily inputting a comment are provided. In the reconstruction range input area 81 and the other areas 82, 83, 84, and 85, GUI components are arranged in accordance with their intended purposes.

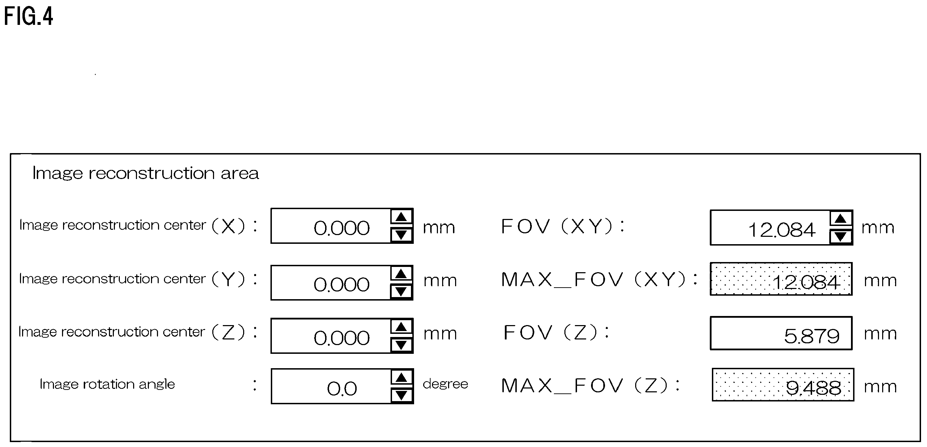

FIG. 4 is a display example of the reconstruction range input area 81.

In the reconstruction range input area 81, GUI components provided with text fields in which a user can input via the input part 49 the respective coordinates of an image reconstruction center coordinate (X), an image reconstruction center coordinate (Y), and an image reconstruction center coordinate (Z), the rotation angle of an image, and the numerical values of FOV(XY) and FOV(Z) are arranged. The user can directly input numerical values using the keyboard, or input desired numerical values by clicking up arrows or down arrows of spin buttons using the mouse. In addition, the numerical value display fields of MAX_FOV(XY) and MAX_FOV(Z) are ones for displaying the maximum values inputtable in the numerical value input area 80 of FOV(XY) and FOV(Z).

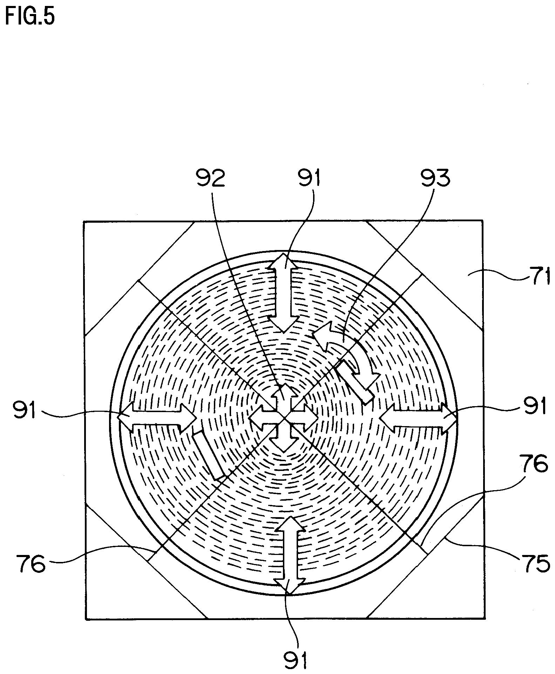

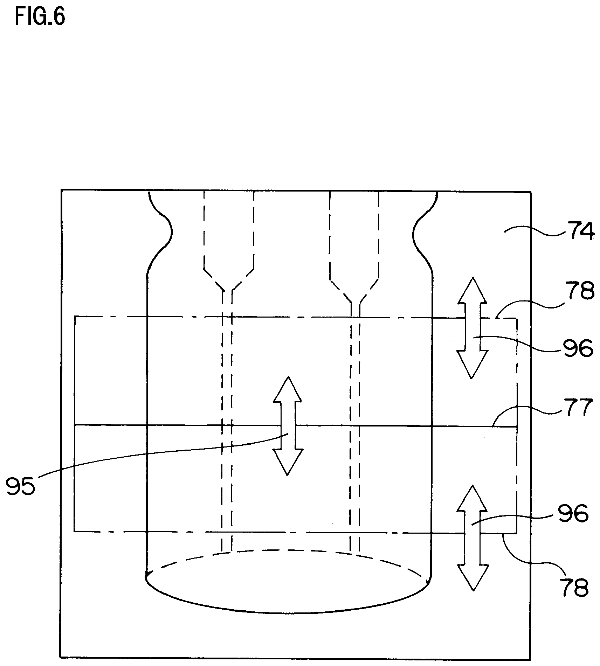

FIG. 5 is a diagram explaining a case where a reconstruction area in the X-Y plane is set on an image. FIG. 6 is a diagram explaining a case where a reconstruction area in the Z-axis direction is set on an image.

FIG. 5 is an enlarged diagram illustrating the central tomographic image display area 71 in FIG. 3. With reference to FIG. 5, described is a case where a user operates the pointing device such as the mouse as the input part 49 to set the reconstruction area in the X-Y plane.

In the central tomographic image display area 71, a central tomographic image, which was subjected to the image reconstruction in parallel with past CT imaging and is stored in the image data storage part 46, and a rectangular frame 75 defining a range within which the image reconstruction is performed again in the X-Y plane are displayed superimposed on each other. In the frame 75, the center of a cross line 76 serves as reconstruction center coordinates in the X-Y plane. A user can expand or contract the frame 75 to expand or contract the size of a field of view, i.e., to expand or contract the reconstruction area by designating the frame line or the inside of the rectangular frame 75 with the mouse to drag it as indicated by an arrow 91. The reconstruction area in the X-Y plane changed at this time is reflected in the text field of FOV(XY) illustrated in FIG. 4. Also, the user can change the reconstruction center coordinates (X), (Y) by designating the vicinity of the center of the cross line 76 with the mouse to drag it as indicated by an arrow 92. The coordinates changed at this time are reflected in the text fields of the reconstruction center (X) and reconstruction center (Y) illustrated in FIG. 4. Further, the user can rotate the frame 75 by designating a point on the cross line 76 with the mouse to drag it as indicated by an arrow 93. A rotated angle at this time is reflected in the text field of the image rotation angle illustrated in FIG. 4.

FIG. 6 is an enlarged diagram illustrating the fluoroscopic image display area 74 in FIG. 3. With reference to FIG. 6, described is a case where the user operates the pointing device such as the mouse as the input part 49 to set the reconstruction area in the Z-axis direction (up-down direction).

In the fluoroscopic image display area 74, a fluoroscopic image obtained by past CT imaging and stored in the raw data storage part 45, and a center line 77 and end lines 78 that define a range in the Z-axis direction when performing the image reconstruction operation again are displayed superimposed on each other. The position of the center line 77 indicated by a solid line in the diagram is a position for determining the reconstruction center position (Z). The user can move the center line 77 up and down by designating the center line 77 with the mouse to drag it as indicated by an arrow 95. The change of the center line 77 is reflected in the text field of the reconstruction center (Z) illustrated in FIG. 4. The positions of the end lines 78 indicated by alternate long and short dash lines in the diagram are positions satisfying equal lengths from the center line 77 in the up and down direction, and represents the upper and lower ends of the image reconstruction target range on the Z-axis. The user can move the positions of the two end lines 78 while keeping the state of the equal lengths from the center line 77, and expand or contract the image reconstruction range in the Z-axis direction by designing any one of the two end lines 78 with the mouse to drag it as indicated by an arrow 96. Ranges defined by the center line 77 and the upper and lower end lines 78 at this time are reflected in the text field of the FOV(Z) illustrated in FIG. 4.

After the end of setting the reconstruction area, when the user operates the mouse and presses the reconstructing button 87, the image reconstruction operation from raw data is performed with the set area as a target. In addition, when ending the reconstruction setting screen, the user operates the mouse and presses the closing button 88 to close the window.

In the past, the center line 77 illustrated in FIG. 6 has been displayed as a line indicating the center position, but has not been able to be moved to change the reconstruction center coordinate on the Z-axis, and therefore the degree of freedom of setting a range in the Z-axis direction in the image reconstruction has been low. In this embodiment, the reconstruction center on the Z-axis can be easily moved, and therefore the degree of freedom of setting the area when performing the image reconstruction operation again is improved. Unlike the conventional case, not only the X-axis and the Y axis, the reconstruction center coordinate of the Z-axis is made changeable, and thereby the area for performing the image reconstruction operation again can be more flexibly set. In addition, in this embodiment, the two end lines 78 representing the upper and lower ends of the reconstruction range on the Z-axis does not only simply set a slice range but can set the range based on the center on the Z-axis determined by moving the center line 77, and therefore information useful to understand the extent of an internal structure from the center set by a user.

As described, the X-ray CT apparatus and reconstruction device according to this embodiment can designate the area for performing the image reconstruction operation not only in the X-Y plane but also in the Z-axis direction, and enables the image reconstruction operation to be performed again on an arbitrary area. Since the reconstruction center coordinates can be set on the X-axis, Y-axis, and Z-axis, a user can adjust the reconstruction center to a position that the user desires to most clearly view and perform the image reconstruction operation again. In this embodiment, when designating the area, it is possible to give instructions on the screen using the GUI functions, and therefore the area for performing the image reconstruction operation again can be changed sensuously quickly by the user. Also, in this embodiment, the target area for the image reconstruction operation is narrowed down by three-dimensionally setting on the three axes of X, Y, and Z. For this reason, an unnecessary area can be efficiently omitted to shorten the time necessary for the image reconstruction operation, as well as to obtain an enlarged cross-sectional image with higher resolution.

A person skilled in the art will understand that the above-described exemplified embodiment is a specific example of the following aspects.

(First aspect) A reconstruction device according to a first aspect is a reconstruction device that reconstructs a tomographic image of a subject on the basis of projection data acquired by applying X-rays to the subject from multiple angles and includes: a reconstruction part that performs an image reconstruction operation on the projection data; a display control part that is provided with a display area for the tomographic image and a fluoroscopic image of the subject, and on a display device, displays a setting GUI screen for setting a reconstruction area; an input part that receives a user operation on the setting GUI screen; and an area setting part that, on the basis of a user input, sets the reconstruction area in the projection data. In addition, with the optical axis of the X-rays as a first axis, an axis orthogonal in the same plane to the first axis as a second axis, and the rotation axis of a rotation stage as a third axis, which is perpendicular to the plane including the first axis and the second axis, as the tomographic image, the display control part displays a central tomographic image at the center, an upper end tomographic image at the uppermost end, and a lower end tomographic image at the lowermost end on the third axis in the reconstruction area set by the area setting part, and as the reconstruction area set by the area setting part, displays the center, the uppermost end, and the lowermost end on the fluoroscopic image, and as the reconstruction area, the area setting part sets the center, the uppermost end, and the lowermost end on the third axis by the user input.

In the reconstruction device according to the first aspect, the area for performing the reconstruction operation again is set by a range in the plane including the first axis and the second axis and a range defined by the position of the reconstruction center on the third axis, and therefore the area for performing the reconstruction operation again can be more flexibly set.

(Second aspect) In the reconstruction device according to the first aspect, the area setting part sets the reconstruction area so that the length from the center to the uppermost end on the third axis and the length from the center to the lowermost end on the third axis are equalized.

In the reconstruction device according to the second aspect, based on the position of the reconstruction center on the third axis, ranges in the third axis direction can be set to respectively have the equal lengths, and therefore information useful to understand the extent of an internal structure from the center set by a user is obtained.

In addition, the above description is for the purpose of describing the embodiment of the present invention but does not limit the present invention.

### Reference Signs List

11: X-ray source
12: X-ray detector
13: Rotation stage
15: Stage movement mechanism
16: Surface plate
30: Control device
31: X-ray controller
32: Stage controller
40: Personal computer
41: Memory
42: Arithmetic unit
43: Storage device
44: Communication part
45: Raw data storage part
46: Image data storage part
48: Display part
49: Input part
51: Display control part
52: Area setting part
53: Reconstruction part
59: Internal bus
70: Image display area
71: Central tomographic image display area
72: Upper end tomographic image display area
73: Lower end tomographic image display area
74: Fluoroscopic image display area
80: Numerical value input area
81: Reconstruction range input area
82: Area
83: Area
84: Area
85: Area
86: Reading button
87: Reconstructing button
88: Closing button
91: Arrow
92: Arrow
93: Arrow
95: Arrow
96: Arrow
100: Subject

## Claims

1. A reconstruction device that reconstructs a tomographic image of a subject on a basis of projection data acquired by applying an X-ray to the subject from multiple angles, the reconstruction device comprising:
a reconstruction part that performs an image reconstruction operation on the projection data;
a display control part that is provided with a display area for the tomographic image and a fluoroscopic image of the subject, and on a display device, displays a setting GUI screen for setting a reconstruction area;
an input part that receives a user operation on the setting GUI screen; and
an area setting part that, on a basis of a user input, sets the reconstruction area in the projection data, wherein
with an optical axis of the X-ray as a first axis, an axis orthogonal in a same plane to the first axis as a second axis, and a rotation axis of a rotation stage as a third axis, the rotation axis being perpendicular to the plane including the first axis and the second axis,
as the tomographic image, the display control part displays a central tomographic image at a center, an upper end tomographic image at an uppermost end, and a lower end tomographic image at a lowermost end on the third axis in the reconstruction area set by the area setting part, and as the reconstruction area set by the area setting part, displays the center, the uppermost end, and the lowermost end on the fluoroscopic image, and
as the reconstruction area, the area setting part sets the center, the uppermost end, and the lowermost end on the third axis by the user input.

2. The reconstruction device according to claim 1, wherein
the area setting part sets the reconstruction area so that length from the center to the uppermost end on the third axis and length from the center to the lowermost end on the third axis are equalized.
